Europäisches Patentamt

European Patent Office

Office européen des brevets

(11) Veröffentlichungsnummer: **0 355 402**
**A2**

(12) **EUROPÄISCHE PATENTANMELDUNG**

(21) Anmeldenummer: **89113308.4**

(22) Anmeldetag: **20.07.89**

(51) Int. Cl.⁴: **F25D 3/11 , A23L 3/36**

(30) Priorität: **18.08.88 DE 8810449 U**

(43) Veröffentlichungstag der Anmeldung:
**28.02.90 Patentblatt 90/09**

(84) Benannte Vertragsstaaten:
**AT CH DE LI**

(71) Anmelder: **MESSER GRIESHEIM GMBH**
**Hanauer Landstrasse 330**
**D-6000 Frankfurt/Main(DE)**

(72) Erfinder: **Buchmüller, Jürgen**
**Horstdyk 47**
**D-4150 Krefeld(DE)**
Erfinder: **Hoffmanns, Wolfgang**
**Seidenstrasse 20**
**D-4156 Willich(DE)**
Erfinder: **Weyermanns, Günther**
**Hans Sachs Strasse 18**
**D-5142 Hückelhoven 6(DE)**

(54) Gefriereinrichtung für stückige, oberflächenfeuchte Lebensmittel.

㊵7 Stückige, oberflächenfeuchte Lebensmittel neigen beim Gefrieren in Bandfrostern zum Ankleben und Verklumpen. Dies führt zu Produktschäden. Um dies zu vermeiden, wird an der Eintrittsöffnung (8) des Bandfrosters ein Tauchfroster (9) angeordnet, in dem die Lebensmittel vereinzelt und angefrostet werden. Das verdampfte Kältemittel wird im Gleichstrom durch die Austrittsöffnung (6) des Bandfrosters abgezogen. Der Bandfroster kann als Langtunnel, Wendelbandtunnel oder Mehretagentunnel ausgeführt sein.

**EP 0 355 402 A2**

## Gefriereinrichtung für stuckige, oberflächenfeuchte Lebensmittel

Die Erfindung betrifft eine Gefriereinrichtung für stückige, oberflächenfeuchte Lebensmittel nach dem Oberbegriff des Anspruches 1.

Lebensmittel werden gewöhnlich in Bandfrostern gefroren. Dies sind Lang- oder Wendelbandtunnel, die ein isoliertes Gehäuse aufweisen, durch welches ein Förderband bewegt wird. Die zu gefrierenden Lebensmittel werden am Eingang des Bandfrosters auf das Förderband gegeben und durchlaufen ihn langsam. Als Kältemittel dient gewöhnlich flüssiger Stickstoff, der an einer oder mehreren Stellen des Bandfrosters zudosiert wird, insbesondere an der Tunnelaustrittsöffnung. Der flüssige Stickstoff verdampft und wird mittels einer Ventilationseinrichtung im Gegenstrom zur Förderrichtung des Bandes zur Tunneleintrittsöffnung hin abgesaugt. Dieses Gefrierprinzip gilt sowohl für Langtunnel als auch für Mehretagentunnel und für Wendelbandtunnel, bei denen das Förderband eine Wendelbahn in einem isolierten Gehäuse durchläuft. Einen derartigen Langtunnel zeigt beispielsweise die DE-PS 24 41 757. Neben diesen Bandfrostern sind zum Gefrieren von Lebensmitteln auch Tauchfroster im Gebrauch, bei denen das Förderband ein Bad aus dem flüssigen Kältemittel durchläuft, in der Regel ebenfalls flüssiger Stickstoff. Einen derartigen Tauchfroster zeigt beispielsweise die DE-PS 24 15 617. Wegen ihres günstigeren Wirkungsgrades werden jedoch Bandfroster im allgemeinen bevorzugt.

Viele Lebensmittel können in derartigen Bandfrostern problemlos gefroren werden. Schwierigkeiten bereiten jedoch stückige, oberflächenfeuchte Lebensmittel, beispielsweise Muschelfleisch, Pilze, Shrimps und einige Sorten Beerenobst wie z.B. Erdbeeren. Diese Lebensmittel neigen zum Anfrieren auf den Förderbändern und zum Verklumpen, was zu Produktschäden führt.

Der Erfindung liegt daher die Aufgabe zugrunde, eine Gefriereinrichtung zu schaffen, welche es gestattet, auch stückige, oberflächenfeuchte Lebensmittel zu gefrieren, ohe daß diese ankleben oder verklumpen.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Der Erfindung liegt demnach der Gedanke zugrunde, die stückigen, oberflächenfeuchten Lebensmittel in einem Tauchfroster vereinzelnd anzufrosten. Je nach Produkt liegt die Anfrierzeit zwischen 8 und 35 Sekunden. Danach ist die Oberfläche dieser Lebensmittel soweit angefroren, daß sie nicht mehr zusammenfrieren oder verklumpen können. Anschließend werden sie auf den Bandfroster aufgegeben und wirtschaftlich in etwa 10 bis 12 Min. auf die gewünschte Kerntemperatur von beispielsweise -18° C gefrostet. Der Tauchfroster und der Bandfroster besitzen daher separate, stufenlos regelbare Antriebe. Die Produkteingabe in den Tauchfroster erfolgt bevorzugt mittels einer Magnetrinne und Zuführband. Hiermit läßt sich eine besonders gute Vereinzelung der Lebensmittel erreichen.

Das verdampfte kalte Gas aus dem Tauchfroster wird durch eine an der Austrittsöffnung des Bandfrosters installierte Ventilationseinrichtung abgezogen. Das kalte Gas strömt daher im Gleichstrom mit den Lebensmitteln auf dem Förderband des Bandfrosters. Dies steht im Gegensatz zum Stand der Technik, gemäß dem das kalte Gas im Gegenstrom zur Förderrichtung des Bandes durch den Bandfroster geführt wird. Da jedoch im Tauchfroster soviel kaltes verdampftes Gas entsteht, daß es vielfach bereits allein ausreicht, die Lebensmittel im Bandfroster auf die gewünschte Kerntemperatur zu frosten, läßt sich die erfindungsgemäße Einrichtung mit Vorteil mit dem an sich unwirtschaftlicheren Gleichstrom betreiben. Die Hauptmenge des Kühlmittels wird daher auch in den Tauchfroster dosiert, während im Bandfroster nur eine Dosiervorrichtung für ergänzende Kühlmittelmengen erforderlich ist.

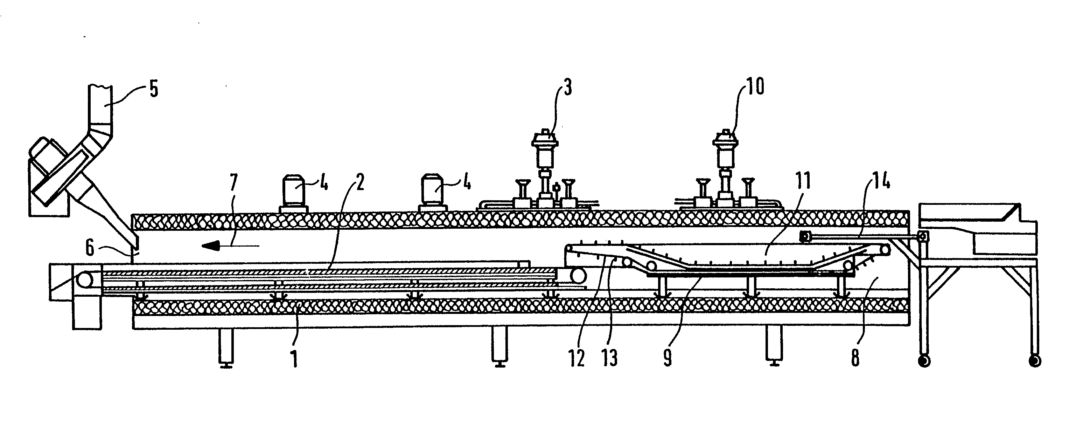

Die Zeichnung veranschaulicht ein Ausführungsbeispiel der Erfindung im Längsschnitt.

Die in der Fig. dargestellte Gefriereinrichtung besteht aus einem Bandfroster mit einem isolierten Gehäuse 1, in welchem ein Förderband 2 angeordnet ist. Als Kühlmittel wird bei Bedarf flüssiger Stickstoff mittels der Dosiereinrichtung 3 eingesprüht. Zur Umwälzung des verdampften Stickstoffes dienen Ventilatoren 4. An der Austrittsöffnung 6 des Bandfrosters ist eine Ventilationseinrichtung 5 vorgesehen, durch welche der verdampfte Stickstoff abgezogen wird. Der Pfeil 7 gibt die Strömungsrichtung des verdampften Stickstoffes und die Förderrichtung der auf dem Förderband 2 befindlichen Lebensmittel an.

Erfindungsgemäß ist an der Eintrittsöffnung 8 im isolierten Gehäuse 1 ein Tauchfroster 9 installiert. Der Tauchfroster 9 besitzt eine Dosiereinrichtung 10 für flüssigen Stickstoff zur Aufrechterhaltung eines Bades 11 aus flüssigem Stickstoff. Das mit Mitnehmern 13 versehene Förderband 12 durchläuft das Bad 11 aus flüssigem Stickstoff. Die Eingabe der stückigen, oberflächenfeuchten Lebensmittel erfolgt mit Hilfe der Magnetrinne und des Zuführbandes 14. Die Lebensmittel fallen einzeln auf das Zuführband 14 und in das Bad 11 aus flüssigem Stickstoff, worin sie angefrostet werden. Die Aufenthaltsdauer im Bad 11 beträgt je nach Produkt bis zu 35 Sekunden. Eine gleichmäßige Aufenthaltsdauer wird durch Mitnehmer 13 erreicht, die auf dem Förderband 12 angebracht sind. Vom Tauchfroster 9 gelangen die Lebensmittel auf das Förderband 2 des Bandfrosters. Dieses besitzt einen eigenen Antrieb, der so eingestellt wird, daß die Aufenthaltsdauer der im Tauchfroster nur an der Oberfläche gefrorenen Lebensmittel auf dem Bandfroster etwa 10 bis 12 Min. beträgt.

Sie werden dort auf eine Kerntemperatur von beispielsweise -18° C gefrostet. Da die Oberfläche der Lebensmittel bereits gefroren ist, können sie auf dem Förderband 2 nicht ankleben und auch nicht verklumpen. Als Kühlmittel für den Bandfroster dient der im Tauchfroster 9 verdampfte Stickstoff. Falls erfoderlich, wird zusätzlich flüssiger Stickstoff durch die Dosiereinrichtung 3 eingesprüht.

## Ansprüche

1. Gefriereinrichtung für stückige, oberflächenfeuchte Lebensmittel, die al von einem isolierten Gehäuse (1) umgebener Bandfroster mit Ein-(8) und Austrittsöffnung (6) ausgebildet ist, eine Dosiereinrichtung (3) zum Einsprühen eines tiefsiedenden verflüssigten Gases und eine Ventilationseinrichtung (5) zum Abzug des verdampften Gases aufweist, gekennzeichnet durch einen an der Eintrittsöffnung im isolierten Gehäuse installierten Tauchfroster (9) mit Dosiereinrichtungen (10) für ein tiefsiedendes verflüssigtes Gas.

2. Gefriereinrichtung nach Anspruch 1, gekennzeichnet durch eine Magnetrinne und Zuführband (14) zur Produkteingabe in den Tauchfroster.

3. Gefriereinrichtung nach Anspruch 1 oder 2, gekennzeichnet durch eine an der Austrittsöffnung des isolierten Gehäuses angeordnete Ventilationseinrichtung zum Abzug des im Tauchfroster und Langfroster verdampften tiefsiedenden verflüssigten Gases.

EM 1353